# EUROPEAN PATENT SPECIFICATION

(11) **EP 0 400 242 B1**
(45) Date of publication and mention of the grant of the patent: **05.07.1995**
(21) Application number: 89311838.0
(22) Date of filing: 15.11.1989
(51) Int. Cl.: G11B 5/127, H01F 10/00

(54) **Metal-in-gap magnetic head**
MIG-Magnetkopf
Tête magnétique MIG

(30) Priority: 31.05.1989 US 359162
(43) Date of publication of application: 05.12.1990
(73) Proprietor: SEAGATE TECHNOLOGY INTERNATIONAL, Georgetown, Grand Cayman Island (KY)
(72) Inventor: Rask, Mats Thomas, Minneapolis Minnesota 55435 (US); Longworth, Leroy Leland, Waconia Minnesota 55387 (US)
(74) Representative: Sturt, Clifford Mark

(56) References cited:
- EP-A- 0 222 985
- EP-A- 0 238 793
- EP-A- 0 378 160
- DE-C- 3 807 894
- JP-A- 6 486 307
- US-A- 4 670 807
- US-A- 4 742 412
- US-A- 4 764 832
- US-A- 4 768 118
- "Encyclopedia of Composite Materials and Components", editor: Martin Grayson, John Wiley & Sons, New York - Chichester - Brisbane - Toronto - Singapore, 1983, p.1005 and 1042;

## Description

The present invention relates to metal-in-gap (MIG) ferrite magnetic heads.

The advent of high coercivity magnetic media has led to a renewed interest in metal-in-gap (MIG) ferrite magnetic heads. In a metal-in-gap ferrite magnetic head, a layer of a material of high magnetic moment is deposited on the trailing edge core face to achieve improved write characteristics and consequently higher linear recording density. Improved read characteristics may be achieved by the use of a layer of a material of high magnetic moment on one or both of the core faces.

In one typical configuration, the ferrite cores are formed from Mn-Zn ferrite, and the material of high magnetic moment deposited on the core faces is an Fe-Si-Al based alloy known as Sendust (trade mark).

It has been discovered that MIG heads exhibit a so called "secondary electrical pulse", which appears to be produced at the location of the ferrite-metal interface. This is believed to be due to a chemical reaction between the metal (e.g. Sendust) and the ferrite (e.g. Mn-Zn ferrite) resulting in a magnetically dead reaction layer (i.e. a "secondary gap" or "pseudo gap") between the ferrite and the metal, which has a high magnetic moment. In Kajiwara et al, "Auger Spectroscopy Analysis of Metal/Ferrite Interface Layer in Metal-In-Gap Magnetic Gap" Intermag/MMM Conference, Vancouver, B.C., paper EE-11 (1988), it was reported that when the metal was Sendust, the reaction layer which apparently produces the secondary pulse is composed of Al₂O₃ and SiO₂. In addition, Kajiwara et al reported that use of another metal having a high magnetic moment (an Fe-Ga-Si-Ru alloy) instead of Sendust resulted in a reaction layer composed of Ga₂O₃ and SiO₂. To reduce the secondary pulse problem, Kajiwara et al suggested the use of a thin barrier layer of silicon dioxide or silicon oxynitride between the ferrite and the metal. It was reported by Kajiwara et al that such a barrier layer reduced reaction between the metal and the Mn-Zn ferrite. The barrier layer appeared to be more effective when the metal was Fe-Ga-Si-Ru alloy than when the metal was Sendust.

The problem of the secondary gap in a metal-in-gap head was also discussed in Sillen et al, "Permalloy/Sendust Metal-In-Gap Head" IEEE Trans. On Mag., Vol. 24, No. 2, pages 1802 to 1804 (1988), and in U.S. Patent No. 4,764,832. The proposed solution in both of these references is a layer of Permalloy (trade mark) (NiFe) between the ferrite core face and the Sendust layer, the thickness of this Permalloy layer being between 50 and 2000 nm (500 and 20,000 Angstroms).

U. S. Patent No. 4,704,788 discusses the problem of pseudo gaps at the inter-face between the ferrite core and a Sendust layer of a MIG head. The patent suggests a method of fabrication which includes depositing a thin adhering layer over the ferrite before depositing the Sendust alloy layer. The patent does not disclose, however, the composition of the thin adhering layer.

U. S. Patent No. 4,670,807 also discloses a MIG head and indicates that there are transition zones between each of the ferrite cores and a corresponding Sendust layer. This patent suggests modifying relative thicknesses of the Sendust layers to achieve better frequency response. It also suggests that transition zones be made of glass or titanium to serve for better bonding between the ferrite cores and the Sendust layers.

U. S. Patents Nos. 4,742,412 and 4,768,118 each describe a MIG head having a thin layer of chromium or titanium between a Sendust layer and a trailing ferrite core. This thin layer is between 20 and 50 nm (200 and 500 Angstroms) in thickness. A thinner layer of titanium would not be able to act as a barrier layer because it oxidizes and forms grains.

There is a continuing need for improved MIG heads which offer better suppression of secondary pulse phenomena than has been possible with the prior art approaches.

All of the foregoing documents disclose the problem to which the present invention is directed.

According to the present invention, there is provided a magnetic head as claimed in claim 1.

EP-A-0 378 160, which falls under Article 54, paragraph 3, EPC and is therefore not relevant to the question of inventive step, already describes such heads with barrier layers not of a refractory metal, but of a chemical compounds.

Preferably the metal of the or each barrier layer is a metal from the group consisting of tungsten and tantalum.

Thus, the present invention provides an improved MIG head, in which a thin barrier layer of a refractory metal (such as tungsten or tantalum) is formed between at least one ferrite core face and a metal layer of a material of high magnetic moment (such as Sendust). Both tungsten and tantalum form continuous films at very low thicknesses and provide an effective diffusion barrier between the ferrite and the material of high magnetic moment. The diffusion barrier suppresses the formation of the reaction layer which, in conventional MIG heads, causes secondary pulse phenomena at the ferrite-Sendust inter-face.

The invention is described further, by way of example, with reference to the accompanying drawings, in which:-
Figure 1 is a side view of a MIG magnetic head according to the present invention;
Figure 2 is an enlarged fragmentary view of the MIG magnetic head of Figure 1 showing the gap area;
Figure 3 is an enlarged fragmentary view of another embodiment of MIG magnetic head according to the present invention, in which a layer of a metal of high magnetic moment and a barrier layer are applied to only one face of a ferrite core; and
Figure 4 is a diagram showing the layer structure of samples subjected to analysis, using Auger electron spectroscopy, to assess the effectiveness of the barrier layer.

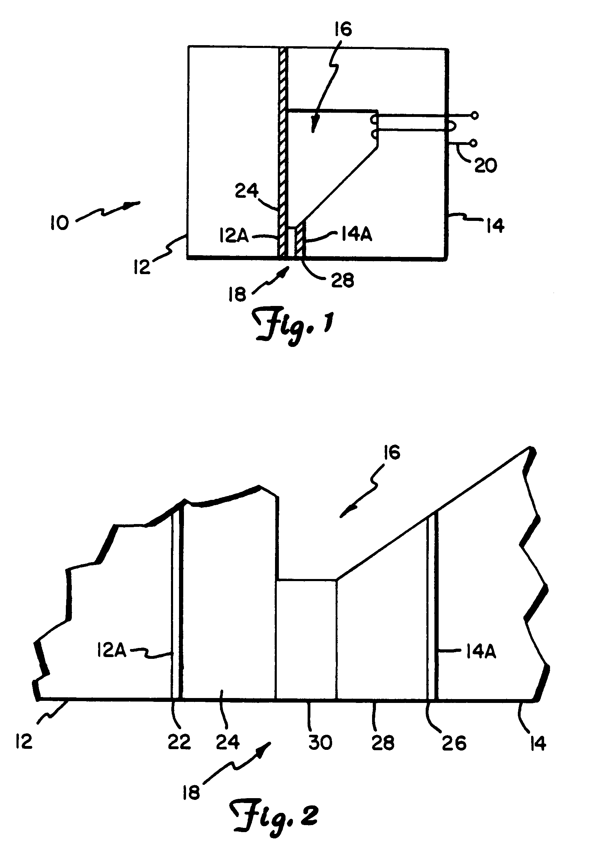

Referring initially to Figure 1, a metal-in-gap (MIG) magnetic head 10 includes an I-shaped ferrite member 12 and a C-shaped ferrite member 14, which are joined together to define a transducer head having a winding aperture 16 and a transducer gap area 18. A coil 20 is wound around a portion of the C-shaped ferrite member 14 as shown.

The gap area 18 of the magnetic head 10 is shown in greater detail in Figure 2. A face 12A of the I-shaped core member 12 is covered by a thin barrier layer 22. A layer 24 of a high compliance magnetic material, such as Sendust, is deposited over the barrier layer 22.

Similarly, at an opposite face 14A of the C-shaped ferrite member 14, a barrier layer 26 separates a Sendust layer 28 from the face 14A. A gap oxide layer 30 is formed between the Sendust layers 24 and 28, and defines the primary gap of the magnetic head 10.

The purpose of the barrier layers 22 and 26 is to provide diffusion barriers to prevent the formation of reaction layers at the inter-faces between the ferrite member 12 and the Sendust layer 24 and between the ferrite member 14 and the Sendust layer 28. In the articles mentioned above by Kajawara et al and Sillen et al, and in U.S. Patent No. 4,764,832, it is reported that, in conventional MIG heads, the formation of a non-magnetic reaction layer at the inter-face between a ferrite core and a Sendust layer creates a secondary gap which produces secondary pulses. The secondary pulse phenomena degrades the overall performance of conventional MIG magnetic heads.

In the present invention, the barrier layers 22 and 26 are formed from refractory metals having a high melting point: tungsten and tantalum. Both tungsten and tantalum form continuous films at very low thicknesses (as low as about 5 nm (50 Angstroms)). Both metals have high melting temperatures and do not undergo phase transformation in the temperature range in which MIG magnetic heads are typically processed (0°C to about 900°C).

According to the present invention, the barrier layers 22 and 26 have a thickness between about 5 and 15 nm (50 and 150 Angstroms), and preferably they are about 10 nm (100 Angstroms) thick. This has been found to be effective in significantly reducing secondary pulse phenomena.

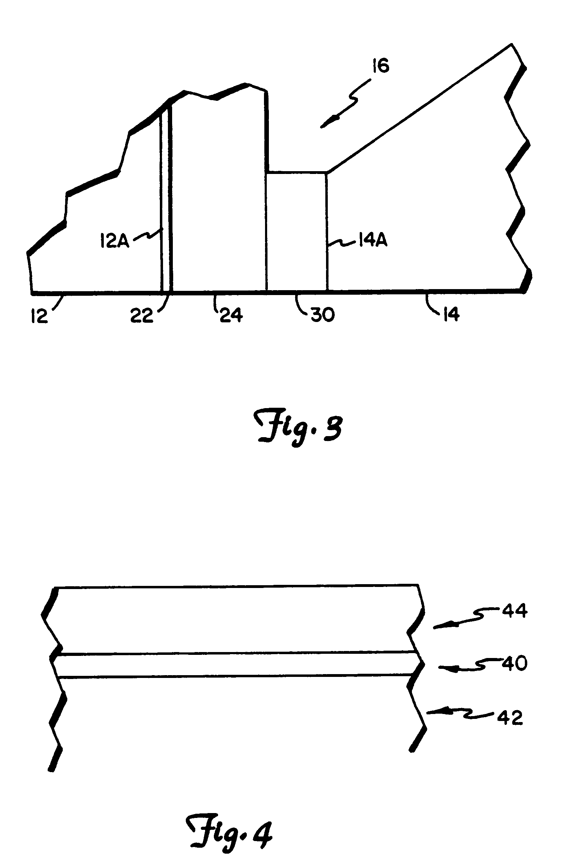

Figure 3 shows an alternative embodiment of magnetic head according to the present invention, which is generally similar to the embodiment of Figures 1 and 2, and similar reference numerals are used to designate similar elements. The magnetic head of Figure 3 differs from that shown in Figures 1 and 2 in that there is only a single Sendust layer 24, which is separated from the core face 12A by the barrier layer 22. The gap oxide layer 30 separates the Sendust layer 24 from the core face 14A of the C-shaped core member 14. The barrier layer 22 comprises a refractory metal (e.g. tungsten or tantalum) and has a thickness of between about 50 and about 150 Angstroms.

To demonstrate the effectiveness of the tungsten and tantalum barrier layers, tests were performed using Auger electron spectroscopy. These tests measured the effect of barrier layers of different materials on inter-action between components of a Mn-Zn ferrite substrate and a layer of Sendust. As illustrated in Figure 4, a barrier layer 40 was deposited on a surface of a Mn-Zn substrate 42. A layer of Sendust was then deposited over the barrier layer 40.

In these tests, the barrier layer 40 and the Sendust layer 44 were deposited under zero stress conditions using sputter depositing techniques. Materials used for the barrier layer 40 included tungsten, tantalum and Permalloy. The tungsten and tantalum barrier layers used in the tests were 10 nm (100 Angstroms thick). The Permalloy barrier layer used in the tests was 250 Angstroms thick. The composition of the Sendust layer 44 was 83% Fe, 11% Si and 6% Al, and the thickness of the Sendust layer 44 was approximately 300 Angstroms. The samples formed in the fashion shown in Figure 4 were subjected to thermal annealing at 650°C for two hours. Auger electron spectroscopy was then performed on the samples. The analysis using Auger electron spectroscopy involved slowly sputtering off the deposited layers and analysing them to determine which atomic species were present.

After the thermal annealing at 650°C for two hours, both the 10 nm (100 Angstrom) thick tungsten barrier layer and the 10 nm (100 Angstrom) thick tantalum barrier layer had suppressed the formation of aluminium oxide at the Sendust-ferrite inter-face. In contrast, the Permalloy (NiFe) barrier layer, which was 250 Angstroms thick, was not sufficient to prevent the formation of aluminium oxide at the inter-face.

MIG magnetic heads having the configuration shown in Figure 3 were compared with similar MIG heads having no barrier layer and with standard ferrite heads which did not have an MIG configuration. The secondary pulse was measured as a ratio of the primary pulse produced by the head, using a digitising oscilloscope to observe both the primary and secondary pulses. The non-MIG heads tested had a configuration which should not produce any secondary pulse, and therefore provided an indication of the extent of noise in the measurement system.

The MIG heads (both with and without the barrier layer of the present invention) produced much improved electrical parametrical results compared to the non-MIG heads. This was expected, due to the addition of a layer of a material of high magnetic moment (Sendust). Significantly, the modified MIG heads of the present invention exhibited a secondary pulse which was suppressed significantly by comparison with the secondary pulse exhibited by the MIG heads without the barrier layer.

Based both on Auger electron spectroscopy tests and on the electrical tests, the use of a thin layer of tungsten or tantalum as a diffusion barrier between a ferrite core face and a material of high magnetic moment such as Sendust is particularly effective in preventing the formation of a reaction layer at the Sendust-ferrite inter-face which can cause secondary pulse phenomena.

## Claims

1. A magnetic head comprising:
a ferrite magnetic core (10) having first and second core members (12, 14), the first and second core members having opposed faces (12A, 14A) with a material (30) providing a non-magnetisable transducing gap;
at least one metal layer (24, 28) of high magnetic moment therebetween; and
at least one thin barrier layer (22, 26) comprising a refractory metal and formed between a respective one of the opposed faces and the at least one layer of the material of high magnetic moment;
characterised in that said thin barrier layer has a thickness of between 5 to 15 nm (50 to 150 Angstroms) for suppressing secondary pulse phenomena.

2. A magnetic head as claimed in claim 1 in which: said at least one thin barrier layer comprises a first barrier layer (22) deposited on the first face and, a second barrier layer (26) deposited on the second face; said at least one metal layer comprises a first layer (24) deposited on the first barrier layer and a second layer (28) deposited on the second barrier layer, the non-magnetisable transducing gap material being positioned between the first and second layers of high magnetic moment material.

3. A magnetic head according to claim 1 or 2 characterised in that the or each barrier layer has a thickness of about 10 nm (100 Angstroms).

4. A magnetic head according to any of claims 1 to 3 characterised in that the or each barrier layer comprises tungsten.

5. A magnetic head according to any of claims 1 to 4 characterised in that the metal of the or each barrier layer comprises tantalum.

6. A magnetic head according to any preceding claim characterised in that the high magnetic moment material is an Fe-Si-Al alloy.

## Patentansprüche

1. Magnetkopf mit:
einem Ferrit-Magnetkern (10) mit ersten und zweiten Kernbauteilen (12, 14), wobei die ersten und zweiten Kernbauteile gegenüberliegende Flächen (12A, 14A) mit einem Material (30) aufweisen, das einen nicht magnetisierbaren Wandlerspalt bildet,
zumindestens eine Metallschicht (24, 28) mit hohem magnetischen Moment zwischen diesen, und
zumindestens einer dünnen Sperrschicht (22, 26), die ein feuerfestes Material umfaßt und zwischen einer jeweiligen der gegenüberliegenden Flächen und der zumindestens einen Schicht aus Material mit hohem magnetischem Moment gebildet ist, dadurch gekennzeichnet, daß die dünne Sperrschicht eine Dicke zwischen 5 bis 15 nm (50-150 Angström) aufweist, um Sekundärimpuls-Phänomen zu unterdrücken.

2. Magnetkopf nach Anspruch 1, bei dem die zumindestens eine dünne Sperrschicht eine erste Sperrschicht (22), die auf der ersten Fläche abgeschieden ist, und eine zweite Sperrschicht (26) umfaßt, die auf der zweiten Fläche abgeschieden ist, wobei die zumindestens eine Metallschicht eine erste Schicht (24), die auf der ersten Sperrschicht abgeschieden ist, und eine zweite Schicht (28) umfaßt, die auf der zweiten Sperrschicht abgeschieden ist, wobei das nichtmagnetisierbare Wandler-Spaltmaterial zwischen den ersten und zweiten Schichten aus dem Material mit hohem magnetischem Moment angeordnet ist.

3. Magnetkopf nach Anspruch 1 oder 2,
dadurch gekennzeichnet, daß die oder jede Sperrschicht eine Dicke von ungefähr 10 nm (100 Angström) aufweist.

4. Magnetkopf nach einem der Ansprüche 1 bis 3,
dadurch gekennzeichnet, daß die oder jede Sperrschicht Wolfram umfaßt.

5. Magnetkopf nach einem der Ansprüche 1 bis 4,
dadurch gekennzeichnet, daß das Metall der oder jeder Sperrschicht Tantal umfaßt.

6. Magnetkopf nach einem der vorhergehenden Ansprüche,
dadurch gekennzeichnet, daß das das hohe magnetische Moment aufweisende Material eine Fe-Si-Al-Legierung ist.

## Revendications

1. Tête magnétique comprenant :
un noyau magnétique en ferrite (10) comprenant un premier et un second éléments de noyau (12, 14), le premier et le second élément de noyau ayant des faces opposées (12A, 14A) avec un matériau (30) constituant un entrefer de transducteur qui ne peut pas être aimanté ;
au moins une couche métallique (24, 28) ayant un moment magnétique élevé entre les deux éléments ; et
au moins une mince couche (22, 26) formant barrière constituée d'un matériau réfractaire et située entre une face respective des faces opposées et la couche au moins de matériau à moment magnétique élevé ;
caractérisée en ce que la mince couche formant barrière a une épaisseur comprise entre 5 et 15 nm (50 à 150 Angstroms) pour supprimer les phénomènes d'impulsion secondaire.

2. Tête magnétique selon la revendication 1, dans laquelle : ladite couche au moins formant barrière comprend une première couche (22) de barrière déposée sur la première face et une seconde couche (26) formant barrière déposée sur la seconde face ; ladite couche métallique au moins comprend une première couche (24) déposée sur la première couche de barrière et une seconde couche (28) déposée sur la seconde couche de barrière, le matériau de l'entrefer de transducteur ne pouvant pas être aimanté, étant placé entre la première et la seconde couches de matériau à moment magnétique élevé.

3. Tête magnétique selon la revendication 1 ou 2, caractérisée en ce que la ou chaque couche formant barrière a une épaisseur d'environ 10 nm (100 Angstroms).

4. Tête magnétique selon l'une quelconque des revendications 1 à 3, caractérisée en ce que la ou chaque couche formant barrière comporte du tungstène.

5. Tête magnétique selon l'une quelconque des revendications 1 à 4, caractérisée en ce que la ou chaque couche métallique formant barrière comporte du tantale.

6. Tête magnétique selon l'une quelconque des revendications précédentes, caractérisée en ce que le matériau à moment magnétique élevé est un alliage de Fe-Si-Al.
